# EUROPÄISCHE PATENTSCHRIFT

(11) **EP 4 024 567 B1**
(45) Veröffentlichungstag und Bekanntmachung des Hinweises auf die Patenterteilung: **24.04.2024**
(21) Anmeldenummer: 21217236.5
(22) Anmeldetag: 23.12.2021
(51) Int. Cl.: H01M 10/643, H01M 10/627, H01M 10/613, H01M 10/6567, H01M 50/213, H01M 50/251, H01M 50/543, H01M 10/6553

(54) **TEMPERIERTE BATTERIE MIT EINER MEHRZAHL AN ZELLEN**
TEMPERATURE CONTROLLED BATTERY WITH A PLURALITY OF CELLS
BATTERIE THERMORÉGULÉE COMPORTANT UNE PLURALITÉ DE CELLULES

(30) Priorität: 29.12.2020 DE 102020135014
(43) Veröffentlichungstag der Anmeldung: 06.07.2022
(73) Patentinhaber: fischer Power Solutions GmbH, 77855 Achern (DE)
(72) Erfinder: FISCHER, JULIAN, 77876 Kappelrodeck (DE)
(74) Vertreter: Gesthuysen Patentanwälte

(56) Entgegenhaltungen:
- EP-A1- 2 608 309
- DE-A1-102017 102 972
- JP-U- S 565 372
- US-A1- 2013 065 094

## Beschreibung

Die Erfindung betrifft eine Batterie mit einer Mehrzahl an Zellen, einem Batteriegehäuse, einem ersten elektrischen Zellverbinder, einem zweiten elektrischen Zellverbinder, einem ersten elektrischen Batteriepol und einem zweiten elektrischen Batteriepol. Weiter weist die Batterie einen Batteriezulauf und einen Batterieablauf für ein Temperiermedium auf.

Die Batterie ist sowohl für eine Versorgung von Verbrauchern mit elektrischer Energie als auch zur Speicherung von elektrischer Energie vorgesehen, die von Generatoren erzeugt wird. Die Batterie ist insbesondere auch als Pufferbatterie vorgesehen, also als eine Batterie, die bei Ausfall eines Generators eine Versorgung von Verbrauchern übernimmt und/oder die von Generatoren erzeugte elektrische Energie zwischenspeichert, bevor sie von Verbrauchern verbraucht wird. Auch ist sie zur Kompensation von Lastspitzen durch Verbraucher und/oder Erzeugungsspitzen durch Generatoren vorgesehen. Sie ist geeignet, Notstromaggregate, die einen Verbrennungsmotor aufweisen, zu ersetzen. Demnach ist die Batterie hochleistungsfähig. Verbraucher finden sich zum Beispiel in industriellen Anlagen in Form von Pumpen, Servern oder ganzen Rechenzentren. Generatoren sind zum Beispiel Brennstoffzellen, Fotovoltaikanlagen und Windkraftanlagen.

Jede der Zellen weist einen ersten elektrischen Zellkontakt auf einer ersten Fläche der Zelle und einen zweiten elektrischen Zellkontakt auf einer der ersten Fläche gegenüberliegenden zweiten Fläche der Zelle auf. Weiter weist jede der Zellen einen elektrischen Energiespeicher und ein Zellgehäuse auf. Der elektrische Energiespeicher ist im Zellgehäuse angeordnet und das Zellgehäuse umschließt den elektrischen Energiespeicher dicht für ein Temperiermedium. Demnach dringt ein Temperiermedium nicht in die Zelle ein. Der elektrische Energiespeicher weist einen negativen und einen positiven Pol auf. Zum Beispiel sind der negative Pol und der erste Zellkontakt elektrisch miteinander und sind der positive Pol und der zweite Zellkontakt elektrisch miteinander verbunden Dann wird der erste Zellkontakt auch als Minuspol und der zweite Zellkontakt auch als Pluspol bezeichnet. Aus dem Stand der Technik bekannte Zellen sind zum Beispiel Lithium-Ionen-Zellen. Wenn es heißt, eine erste Komponente, wie zum Beispiel der negative Pol, und eine zweite Komponente, wie zum Beispiel der erste Zellkontakt, sind elektrisch miteinander verbunden, dann ist damit gemeint, dass diese elektrisch leitend miteinander verbunden sind.

Das Batteriegehäuse weist einen Batterieboden, einen Batterieträger und einen Batteriedeckel auf. Der Batterieboden, der Batterieträger und der Batteriedeckel umschließen einen Batterieinnenraum, der abgesehen vom Batteriezulauf und Batterieablauf dicht für ein Temperiermedium ist. Die Dichtigkeit des Batterieinnenraums abgesehen vom Batteriezulauf und Batterieablauf für ein Temperiermedium bedeutet, dass das Temperiermedium nur über den Batteriezulauf und den Batterieablauf dem Batterieinnenraum zugeführt oder diesem entnommen werden kann.

Die Zellen sind im Batterieinnenraum zur Umspülung mit einem Temperiermedium angeordnet. Die Anordnung der Zellen erfolgt dabei insbesondere durch den Batterieträger. Eine Temperatur einer Zelle muss in einem Temperaturbereich liegen, damit die Zelle zum einen ihre maximale Leistungsfähigkeit und zum anderen ihre maximale Lebensdauer erreicht. Damit die Zellen in dem Batteriegehäuse im Betrieb der Batterie eine Temperatur in diesem Temperaturbereich haben, werden sie mit einem Temperiermedium umspült. Dabei werden eine Temperatur und eine Durchflussrate des Temperiermediums durch den Batterieinnenraum so gewählt, dass die Temperatur der Zellen im Temperaturbereich liegt. Ein Temperiermedium strömt durch den Batteriezulauf in den Batterieinnenraum hinein und strömt durch den Batterieablauf aus dem Batterieinnenraum hinaus.

Zum einen ist jeder der ersten Zellkontakte und der erste Zellverbinder und zum anderen ist jeder der zweiten Zellkontakte und der zweite Zellverbinder elektrisch miteinander verbunden. Dadurch sind die Zellen der Batterie elektrisch parallel geschaltet.

Weiter sind zum einen der erste elektrische Zellverbinder und der erste Batteriepol und zum anderen der zweite Zellverbinder und der zweite Batteriepol elektrisch miteinander verbunden. Eine elektrische Verbindung mit der Batterie erfolgt über den ersten und den zweiten Batteriepol.

Im Betrieb der Batterie ist jeder der Batteriepole mit einem elektrischen Leiter verbunden und erzeugen die Energiespeicher in den Zellen einen elektrischen Strom oder nehmen einen solchen auf, sodass ein elektrischer Strom über die Leiter und die Batteriepole durch die Batterie fließt. Dabei erzeugen die Energiespeicher Wärme. Da jeder der Batteriepole und Leiter einen elektrischen Widerstand aufweist, erzeugt der Strom Wärme in den Batteriepolen und Leitern. Da jede der Verbindungen zwischen den Batteriepolen und den Leitern einen elektrischen Widerstand aufweist, der zumeist höher ist als die Widerstände der Batteriepole und Leiter, erzeugt der Strom in den Verbindungen auch zumeist mehr Wärme als in den Batteriepolen und Leitern. Dabei ist zu berücksichtigen, dass durch die Parallelschaltung der einzelnen Zellen der Strom durch die Batteriepole, Verbindungen und Leiter eine Summe von Strömen durch die einzelnen Zellen ist. Wenn die Batterie zum Beispiel 37 Zellen hat, dann ist der Strom durch die Batteriepole und Leiter um den Faktor 37 höher als durch die einzelnen Zellen. Die durch den Strom erzeugte Wärme erwärmt die Energiespeicher, die Batteriepole, Leiter und Verbindungen und führt zu einer Erhöhung der elektrischen Widerstände. Die Erwärmung kann insbesondere an den Verbindungen auch zu Beschädigungen führen.

Aus der JP S56 5372 U ist eine Batterie mit einem Gehäuse und einer Mehrzahl an Zellen bekannt, wobei das Gehäuse einen Einlauf und einen Auslauf aufweist. Ein Medium strömt durch den Einlauf und den Auslauf und umspült die Zellen im Gehäuse. Die DE 10 2017 102 972 A1 offenbart eine Batterieanschlusseinrichtung, durch welche ein Medium geströmt werden kann. Aufgabe der vorliegenden Erfindung ist daher, eine Batterie anzugeben, bei welcher eine Erwärmung der Batteriepole und der Verbindungen im Vergleich zum Stand der Technik reduziert ist.

Die Aufgabe wird durch eine Batterie mit den Merkmalen von Anspruch 1 gelöst. Bei dieser Batterie ist der erste Batteriepol durch den Batteriezulauf und ist der zweite Batteriepol durch den Batterieablauf aus dem Batterieinnenraum nach außen geführt. Erfindungsgemäß sind die Batteriepole dadurch im Betrieb der Batterie durch ein Temperiermedium umspült, welches die Batteriepole kühlt, also in den Batteriepolen entstehende Wärme abtransportiert. Durch den Abtransport von Wärme wird eine Erwärmung der Batteriepole zumindest reduziert und dadurch auch eine Erhöhung der Widerstände der Batteriepole. Dadurch eignet sich die Batterie auch für Anwendungen, die Hoch- und Höchstleistung in Bezug auf eine elektrische Kapazität der Batterie erfordern. Da die Batteriepole und die Leiter thermisch miteinander gekoppelt sind, werden auch die Leiter und die Verbindungen gekühlt. Somit wird eine Temperaturverteilung der Batterie homogener, wodurch ihre Lebensdauer steigt. Durch die homogenere Temperaturverteilung ist die Batterie sowohl für höhere Impuls- als auch Dauerleistungen geeignet. Da die ersten und zweiten Zellkontakte der Zellen im Betrieb der Batterie in Kontakt mit einem Temperiermedium sind, ist ein geeignetes Temperiermedium elektrisch isolierend, sodass die Zellen nicht über das Temperiermedium entladen werden. Es kann flüssig oder gasförmig sein oder eine Mischung aus mindestens einem flüssigen und einem gasförmigen Bestandteil aufweisen. Wenn es heißt, eine Komponente, wie zum Beispiel der erste Batteriepol, ist von einem Temperiermedium umspült, dann ist damit gemeint, dass die Komponente in unmittelbaren Kontakt mit dem Temperiermedium ist.

Aufgrund elektrochemischer Eigenschaften und Aufbauweise von Zellen entsteht im Betrieb einer Zelle am Pluspol der Zelle mehr Wärme als am Minuspol. Deshalb ist es vorteilhaft, dass der erste Batteriepol der Batterie der Minuspol und der zweite Batteriepol der Pluspol ist. Denn dann entsteht am zweiten Batteriepol mehr Wärme als am ersten Batteriepol und die am zweiten Batteriepol entstehende Wärme wird sogleich durch ein Temperiermedium von der Batterie abgeführt und nicht erst durch den Batterieinnenraum geführt, in welchem die Wärme zu einer höheren Erwärmung führt als die vom ersten Batteriepol abgeführte Wärme.

In einer Ausgestaltung der Batterie sind sowohl der Batteriezulauf als auch der Batterieablauf im Batteriedeckel angeordnet. Demnach sind nicht nur der Batteriezulauf und der Batterieablauf im Batteriedeckel angeordnet, sondern auch der erste Batteriepol und der zweite Batteriepol. Folglich sind alle Anschlüsse der Batterie, also der Batteriezulauf, der Batterieablauf, der erste Batteriepol und der zweite Batteriepol, auf einer Außenseite der Batterie angeordnet. Dadurch sind die Anschlüsse besser zugänglich, wodurch ein Anschluss der Batterie vereinfacht ist. Hinzu kommt, dass die Batterie für gewöhnlich derart in Bezug auf das Erdschwerefeld angeordnet ist, dass der Batteriedeckel oben ist. Durch die Anordnung des Batteriezulaufs und des Batterieablaufs im Batteriedeckel ist dann sichergestellt, dass ein Temperiermedium im Batterieinnenraum verbleibt, wenn der Batteriezulauf und/oder der Batterieablauf eine Undichtigkeit aufweisen bzw. aufweist.

In einer weiteren Ausgestaltung weisen der Batteriezulauf eine freie Batteriezulaufquerschnittsfläche und der Batterieablauf eine freie Batterieablaufquerschnittsfläche auf und ist die Batteriezulaufquerschnittsfläche kleiner als die Batterieablaufquerschnittsfläche. Die freien Querschnittsflächen sind die Querschnittsflächen, durch welche ein Temperiermedium strömbar ist. Dadurch, dass der Batteriezulauf ein kleinere freie Querschnittsfläche als der Batterieablauf hat, ist gewährleistet, dass sich im Batterieinnenraum kein übermäßiger Druck durch ein durch den Batterieinnenraum strömendes Temperiermedium aufbaut.

In einer weiteren Ausgestaltung sind die Zellen Rundzellen. Bei einer Rundzelle hat das Zellgehäuse die Form eines Zylinders mit einer runden Querschnittskontur. Der Zylinder weist eine erste und eine zweite runde Endfläche auf, die einander gegenüberliegen. Auf der ersten Endfläche ist der erste Zellkontakt und auf der zweiten Endfläche der zweite Zellkontakt angeordnet. Eine Verwendung von Rundzellen ist vorteilhaft, da auch bei einer unmittelbar aneinandergrenzenden Anordnung der Zellen zueinander durch die runde Querschnittskontur der Zellgehäuse Freiräume zwischen den Zellen verbleiben, durch welche ein Temperiermedium strömbar ist.

In einer weiteren Ausgestaltung weist der Batterieboden Bodenaufnahmen für die Zellen auf und sind die Zellen in die Bodenaufnahmen eingesetzt. Vorzugsweise sind die Bodenaufnahmen Zapfen. Die Bodenaufnahmen erleichtern einen Zusammenbau der Batterie. Beim Zusammenbau der Batterie werden die Zellen zunächst in den Batterieträger eingesetzt. Dann wird der Batterieboden auf den Batterieträger gesetzt, wodurch die Zellen in die Bodenaufnahmen eingesetzt werden. Die Zellen sind dann durch die Bodenaufnahmen angeordnet und lateral fixiert.

In einer weiteren Ausgestaltung ist der erste Zellverbinder zwischen dem Batterieboden und den Zellen angeordnet. Demnach ist der erste Zellverbinder zwischen dem Batterieboden und den ersten Zellkontakten angeordnet. Die Abfolge Batterieboden, dann erster Zellverbinder und dann Zellen vereinfacht den Aufbau der Batterie. Beim Zusammenbau der Batterie werden zunächst die Zellen in den Batterieträger eingesetzt. Dann werden die elektrischen Verbindungen zwischen dem ersten Zellverbinder und den ersten Zellkontakten hergestellt. Dann wird der Batterieboden auf den Batterieträger gesetzt. Neben den Zellen ist auch der erste Zellverbinder im Batterieinnenraum angeordnet. Folglich ist auch der erste Zellverbinder im Betrieb der Batterie von einem Temperiermedium umspült und dadurch gekühlt. Da auch jede der Verbindungen der ersten Zellkontakte und des ersten Zellverbinders und die Verbindung des ersten Zellverbinders und des ersten Batteriepols einen elektrischen Widerstand aufweist, erzeugt ein im Betrieb der Batterie fließender Strom Wärme in den Verbindungen. Dabei werden die Verbindungen vom Temperiermedium gekühlt.

Wenn der Batterieboden Bodenaufnahmen aufweist, in welchen die Zellen eingesetzt sind, und der erste Zellverbinder zwischen dem Batterieboden und den Zellen angeordnet ist, dann ist es vorteilhaft, wenn der erste Zellverbinder zu den Bodenaufnahmen passende Bodenausnehmungen aufweist. Denn durch die Bodenausnehmungen ist der erste Zellverbinder im Batterieboden angeordnet und lateral fixiert. Wenn die Bodenaufnahmen im Batterieboden Zapfen sind, dann sind die Bodenausnehmungen im ersten Zellverbinder zu den Zapfen passende Öffnungen.

In einer weiteren Ausgestaltung weist der Batterieträger auf einer dem Batterieboden gegenüberliegenden Ebene Trägeraufnahmen für die Zellen auf und sind die Zellen in die Trägeraufnahmen eingesetzt. Die in die Trägeraufnahmen eingesetzten Zellen sind durch die Trägeraufnahmen angeordnet und lateral fixiert. Wenn der Batterieboden Bodenaufnahmen aufweist, in welche die Zellen eingesetzt sind, und der Batterieträger auf einer dem Batterieboden gegenüberliegenden Ebene Trägeraufnahmen aufweist, in welche die Zellen ebenfalls eingesetzt sind, dann sind die Zellen im Batterieinnenraum vollständig fixiert. Somit ist eine weitere Fixierung der Zellen nicht erforderlich, wodurch der Herstellungsaufwand der Batterie reduziert ist. Insbesondere kommt kein Kleber zum Einsatz. Das ist vorteilhaft, da viele für die Fixierung geeignete Kleber nicht mit geeigneten Temperiermedien kompatibel sind. Jedenfalls ist die Kompatibilität sicherzustellen, was einen erheblichen Aufwand darstellt.

In einer Weiterbildung der vorherigen Ausgestaltung weist der erste Batteriepol eine Batteriepolhalterung auf und ist der erste Batteriepol mit der Batteriepolhalterung in eine der Trägeraufnahmen eingesetzt. Weiter ist die Batteriepolhalterung an die Trägeraufnahme angepasst, sodass der erste Batteriepol gegen ein Verdrehen fixiert ist. Vorzugsweise ist der erste Batteriepol stabförmig ausgebildet. In dieser Weiterbildung ist anstelle einer Zelle der erste Batteriepol in eine der Trägeraufnahmen eingesetzt. Vorzugsweise sind alle Trägeraufnahmen gleich ausgebildet, sodass sowohl die Zellen als auch der erste Batteriepol in diese einsetzbar sind. Durch die gleiche Ausbildung aller Trägeraufnahmen vereinfachen sich Konstruktion und Herstellung des Batterieträgers und damit der Batterie. Eine Fixierung des ersten Batteriepols gegen ein Verdrehen ist vorteilhaft, wenn der erste Batteriepol zum Beispiel über eine Polschraubverbindung mit einem weiteren elektrischen Leiter verbunden wird, da beim Festziehen und Lösen der Schraubverbindung auftretende Drehmomente dann vom Batterieträger und nicht vom ersten Zellverbinder aufgenommen werden. Ein Drehmoment zwischen dem ersten Batteriepol und dem ersten Zellverbinder könnte die Verbindung zwischen diesen beschädigen. Eine Schraubverbindung, wie zum Beispiel eine Polschraubverbindung, von zwei Komponenten miteinander hat den Vorteil, dass die Schraubverbindung auf einfache Weise beliebig oft hergestellt und gelöst werden kann, ohne dass die Komponenten dadurch verändert werden.

In einer Weiterbildung der vorstehenden Weiterbildung weist die Batteriepolhalterung mindestens eine Batteriepolausnehmung auf und ist die freie Batteriezulaufquerschnittsfläche durch die Batteriepolhalterung mit der mindestens einen Batteriepolausnehmung und die Trägeraufnahme bestimmt. Demnach strömt im Betrieb der Batterie ein Temperiermedium durch die mindestens eine Batteriepolausnehmung. Dadurch bilden die Batteriepolhalterung mit der mindestens einen Batteriepolausnehmung und die Trägeraufnahme eine Durchflussdrossel für ein strömendes Temperiermedium.

Wenn der Batterieträger auf einer dem Batterieboden gegenüberliegenden Ebene Trägeraufnahmen aufweist, dann ist es vorteilhaft, wenn mindestens eine der Trägeraufnahmen eine polygone Innenquerschnittskontur aufweist. Die polygone Innenquerschnittskontur ist insbesondere in Verbindung mit Rundzellen vorteilhaft. Denn dann sind Kontaktflächen zwischen den Rundzellen und den Trägeraufnahmen klein, wodurch eine Fläche der Rundzellen entsprechend groß ist, welche mit einem Temperiermedium im Kontakt steht. Sie ist auch vorteilhaft, wenn der erste Batteriepol eine Batteriepolhalterung aufweist und die Batteriepolhalterung eine zur Trägeraufnahme passende polygone Außenquerschnittskontur aufweist. Auf diese Weise ist der erste Batteriepol gegen ein Verdrehen fixiert.

In einer weiteren Ausgestaltung ist der zweite Zellverbinder zwischen dem Batteriedeckel und den Zellen angeordnet. Demnach ist der zweite Zellverbinder zwischen dem Batteriedeckel und den zweiten Zellkontakten angeordnet. Die Abfolge Batteriedeckel, dann zweiter Zellverbinder und dann Zellen vereinfacht den Aufbau der Batterie. Beim Zusammenbau der Batterie werden zunächst die Zellen in den Batterieträger eingesetzt. Dann werden die elektrischen Verbindungen zwischen dem zweiten Zellverbinder und den zweiten Zellkontakten hergestellt. Dann wird der Batteriedeckel auf den Batterieträger gesetzt. Der zweite Zellverbinder ist im Batterieinnenraum angeordnet. Folglich ist auch der zweite Zellverbinder im Betrieb der Batterie von einem Temperiermedium umspült und dadurch gekühlt. Da auch jede der Verbindungen der zweiten Zellkontakte und des zweiten Zellverbinders und die Verbindung des zweiten Zellverbinders und des zweiten Batteriepols einen elektrischen Widerstand aufweist, erzeugt ein im Betrieb der Batterie fließender Strom Wärme in den Verbindungen. Dabei werden die Verbindungen vom Temperiermedium gekühlt.

Wenn der Batterieträger auf einer dem Batterieboden gegenüberliegenden Ebene Trägeraufnahmen aufweist, dann ist es vorteilhaft, die vorstehende Ausgestaltung weiterzubilden, indem der zweite Zellverbinder zwischen den Trägeraufnahmen und dem Batteriedeckel angeordnet ist. Durch die Anordnung des zweiten Zellverbinders zwischen den Trägeraufnahmen und dem Batteriedeckel wird der Aufbau der Batterie weiter vereinfacht. Der zweite Zellverbinder ist vor dem Aufsetzen des Batteriedeckels auf den Batterieträger zugänglich. Vorzugsweise weist mindestens eine der Trägeraufnahmen eine Öffnung auf, die dem zweiten Zellverbinder nur einen Zugang zum zweiten Zellkontakt und keinen Zugang zum ersten Zellkontakt einer in die Trägeraufnahme eingesetzten Zelle freigibt. Durch diese Öffnung wird sichergestellt, dass der zweite Zellverbinder keine elektrische Verbindung zu einem der ersten Zellkontakte und dadurch einen Kurzschluss herstellt. Der zweite Zellverbinder weist passend zu der mindestens einen Öffnung einen Vorsprung auf.

In einer weiteren Ausgestaltung weist der zweite Batteriepol einen Batteriepolkragen auf. Weiter weisen der Batteriepolkragen und der Batterieträger eine formschlüssige Kragenverbindung auf, sodass der zweite Batteriepol gegen ein Verdrehen fixiert ist. Vorzugsweise ist der zweite Batteriepol stabförmig ausgebildet. Die formschlüssige Kragenverbindung ist vorteilhaft, da diese durch ein Einsetzen des zweiten Batteriepols in den Batterieträger entsteht, wodurch der Aufbau der Batterie vereinfacht ist. Eine Fixierung des zweiten Batteriepols gegen ein Verdrehen ist vorteilhaft, wenn der zweite Batteriepol zum Beispiel über eine Polschraubverbindung mit einem weiteren elektrischen Leiter verbunden wird, da beim Festziehen und Lösen der Polschraubverbindung auftretende Drehmomente vom Batterieträger und nicht vom zweiten Zellverbinder aufgenommen werden. Ein Drehmoment zwischen dem zweiten Batteriepol und dem zweiten Zellverbinder könnte die Verbindung zwischen diesen beschädigen. Vorzugsweise sind der Batteriepolkragen und der zweite Zellverbinder durch Laserschweißen miteinander verbunden.

In einer weiteren Ausgestaltung ist von den Komponenten Batterieboden, Batterieträger und Batteriedeckel mindestens eine der Komponenten aus Kunststoff. Vorzugsweise ist eine der Komponenten eine Spritzgusskomponente. Die Verwendung von Kunststoff ist vorteilhaft, da dieser kostengünstig und einfach verarbeitbar ist. Das gilt insbesondere für Spritzgusskomponenten. Vorzugsweise ist zumindest eine der genannten Komponenten aus einem elektrisch nicht leitenden Material.

In einer weiteren Ausgestaltung sind der Batterieboden und der Batterieträger aus voneinander verschiedenen Kunststoffen und weisen eine gemeinsame Bodenkontaktfläche auf. Weiter ist vorgesehen, dass der Batterieboden und der Batterieträger in der Bodenkontaktfläche durch Laserdurchstrahlschweißen stoffschlüssig miteinander verbunden sind. Dabei sind die Kunststoffe derart voneinander verschiedenen, dass einer der Kunststoffe für einen Laserstrahl beim Laserdurchstrahlschweißen wesentlich transparenter ist als der andere Kunststoff. Jedoch haben die Kunststoffe kompatible thermische Ausdehnungskoeffizienten, sodass mechanischen Spannungen zwischen den Komponenten aus den verschiedenen Kunststoffen akzeptabel sind. Zum Beispiel werden die verschiedenen Kunststoffe aus ähnlichen Materialgruppen ausgewählt. Beim Laserdurchstrahlschweißen wird der Laserstrahl derart geführt, dass er durch den transparenteren der beiden Kunststoffe auf den weniger transparenten der beiden Kunststoffe in der Bodenkontaktfläche trifft, den weniger transparenten der beiden Kunststoffeerhitzt, wodurch beide Kunststoffe aufgeschmolzen und auf diese Weise miteinander verschweißt werden. Eine Dichtung ist nicht erforderlich. Eine Dichtung stellt eine Schwachstelle dar. Sie kann zum Beispiel nicht ausreichend beständig gegen ein Temperiermedium sein oder durch Alterung ihre Dichtwirkung verlieren. Auch setzt eine Dichtung einen maximal zulässigen Druck im Batterieinnenraum herab.

Vorzugsweise sind der Batterieboden und der Batterieträger in der Bodenkontaktfläche als Nut-und-Feder ausgebildet und weisen entsprechend eine Nut-und-Feder-Verbindung auf. Zum Beispiel ist die Feder im Batterieträger und ist die Nut im Batterieboden ausgebildet. Die Nut-und-Feder-Verbindung hat verschiedene Vorteile. Zum einen ist durch sie die Bodenkontaktfläche vergrößert. Zum anderen sind der Batterieboden und der Batterieträger zusammengesetzt, aber noch nicht verschweißt, lateral zueinander fixiert, wodurch das Verschweißen vereinfacht ist. Weiter ist die Fläche, in welcher der Kunststoff aufgeschmolzen wird, vergrößert, sodass die Verschweißung über eine größere Fläche erfolgt, was Stabilität und Haltbarkeit verbessert. Auch ist durch die Ausbildung als Nut-und-Feder ein höherer Druck im Batterieinnenraum möglich, da Nut und Feder sich verkeilen.

In einer weiteren Ausgestaltung sind der Batteriedeckel und der Batterieträger aus voneinander verschiedenen Kunststoffen und weisen eine gemeinsame Deckelkontaktfläche auf. Weiter ist vorgesehen, dass der Batteriedeckel und der Batterieträger in der Deckelkontaktfläche durch Laserdurchstrahlschweißen stoffschlüssig miteinander verbunden sind. Vorzugsweise sind der Batteriedeckel und der Batterieträger in der Deckelkontaktfläche als Nut-und-Feder ausgebildet und weisen entsprechend eine Nut-und-Feder-Verbindung auf. Im Übrigen gelten die Ausführungen zur vorstehenden Ausgestaltung entsprechend.

Das stoffschlüssige Verbinden von einerseits dem Batterieboden und dem Batterieträger und andererseits dem Batteriedeckel und dem Batterieträger weist verschiedene Vorteile auf. Ein Vorteil ist die mechanische Stabilität, wodurch die Verbindung auch starken Vibrationen und Erschütterungen standhält. Ein weiterer Vorteil ist, dass diese Verbindungen ohne weitere Dichtmittel dicht für ein Temperiermedium sind. Aus dem Stand der Technik sind Temperiermedien bekannt, insbesondere elektrisch isolierende Temperiermedien, gegen die übliche Dichtmittel nicht beständig sind. Ein fortdauernder Kontakt eines solchen Dichtmittels mit einem solchen Temperiermedium würde das Dichtmittel zerstören, das Temperiermedium kontaminieren und die Dichtigkeit des Batteriegehäuses kompromittieren. Ein weiterer Vorteil ist, dass keine weiteren Verbindungsmittel zum Herstellen der Verbindung erforderlich sind. Ein solches weiteres Verbindungsmittel wären zum Beispiel Schraubverbindungen.

In einer weiteren Ausgestaltung ist von den Komponenten erster Zellverbinder und zweiter Zellverbinder mindestens eine der Komponenten aus einem Blech. Vorzugsweise ist eine der Komponenten aus einem gestanzten und umgeformten Blech. Ein Zellverbinder aus Blech ist vorteilhaft, da die Herstellung aus Blech einfach und kostengünstig ist. Das gilt insbesondere für einen Zellverbinder aus einem gestanzten und umgeformten Blech, da Stanzen und Umformen nur eine geringe Anzahl an Herstellungsschritten erfordert und oftmals auch in einem einzigen Herstellungsschritt umsetzbar sind. Bei kleineren Stückzahlen ist es oft vorteilhaft, das Stanzen durch Laserschneiden zu ersetzen.

In einer weiteren Ausgestaltung sind jeder der ersten Zellkontakte und der erste Zellverbinder durch Laserschweißen miteinander verbunden. Alternativ oder zusätzlich sind jeder der zweiten Zellkontakte und der zweite Zellverbinder durch Laserschweißen miteinander verbunden. Die einzelnen Verbindungen sind dabei elektrisch leitend und stellen auch eine mechanisch stabile Verbindung in Bezug auf Vibrationen und Erschütterungen dar. Die Verbindung der Zellkontakte und der Zellverbinder durch Laserschweißen ist vorteilhaft, da das Herstellen einer solchen Verbindung nur eine kurze Zeit dauert, wodurch auch nur eine geringe Erwärmung der Zellen stattfindet. Eine übermäßige Erwärmung einer Zelle führt zu deren Beschädigung. Hinzu kommt, dass diese Verbindungen im Vergleich zu auf andere Weise hergestellten Verbindungen einen geringeren elektrischen Widerstand aufweisen. Dadurch steigen insbesondere mögliche elektrische Impulsleistungen der Batterie. Alternativen zum Laserschweißen sind Ultraschallschweißen, Widerstandsschweißen und Reibschweißen.

In einer weiteren Ausgestaltung sind der erste Zellverbinder und der erste Batteriepol durch Laserschweißen miteinander verbunden. Alternativ oder zusätzlich sind der zweite Zellverbinder und der zweite Batteriepol durch Laserschweißen miteinander verbunden. Die Ausführungen zum Laserschwei-ßen bei der vorstehenden Ausgestaltung gelten für diese Ausgestaltung entsprechend.

In einer weiteren Ausgestaltung ist auf mindestens einer Außenseite des Batteriegehäuses mindestens eine Überdrucköffnung ausgebildet. Weiter ist die Überdrucköffnung durch eine spröde Berstscheibe als Überdruckventil dicht für ein Temperiermedium verschlossen. Vorzugsweise handelt es sich bei der Außenseite des Batteriegehäuses um die Außenseite des Batteriedeckels. Vorzugsweise handelt es sich bei der Berstscheibe um eine Glasscheibe. Die Überdrucköffnung verbindet den Batterieinnenraum mit einem Außenraum. Die Berstscheibe birst bei einem Überdruck im Batterieinnenraum und ist auf diese Weise ein Überdruckventil. Als Glasscheibe bietet sich zum Beispiel ein Objektträger für die Lichtmikroskopie an. Solche Objektträger sind geeignet, da sie zum einen eine hinreichend geringe Dicke aufweisen. Durch die geringe Dicke sind Berstdrücke für die gegebene Verwendung ausreichend gering. Zum anderen ist eine Konstanz der Dicke über eine Serie von Objektträgern hinreichend, sodass die Berstdrücke hinreichend konstant sind. Hinzu kommt, dass Objektträger kostengünstig im Vergleich zu anderen Überdruckscheiben sind.

In einer weiteren Ausgestaltung ist auf mindestens einer Außenseite des Batteriegehäuses mindestens eine Sensorausnehmung ausgebildet und ist in der Sensorausnehmung ein Temperatursensor angeordnet. Vorzugsweise handelt es sich bei der Außenseite des Batteriegehäuses um die Außenseite des Batteriedeckels. Die Anordnung eines Temperatursensors in einer Ausnehmung ist vorteilhaft, da eine in der Ausnehmung gemessene Temperatur näher an einer tatsächlichen Temperatur der Zellen liegt, als eine auf einer Außenseite gemessene Temperatur.

Im Einzelnen ist eine Vielzahl von Möglichkeiten geben, die Batterie auszugestalten und weiterzubilden. Dazu wird verwiesen sowohl auf die dem unabhängigen Anspruch nachgeordneten Ansprüche als auch auf die nachfolgende Beschreibung eines bevorzugten Ausführungsbeispiels in Verbindung mit der Zeichnung. In der Zeichnung zeigt
- Figur 1: eine perspektivische Ansicht eines Ausführungsbeispiels einer Batterie,
- Figur 2: eine perspektivische Explosionsansicht der Batterie,
- Figur 3: eine in einer Längsrichtung geschnittene Ansicht der Batterie,
- Figur 4: eine erste perspektivische Explosionsansicht eines Batteriegehäuses der Batterie,
- Figur 5: eine zweite perspektivische Explosionsansicht des Batteriegehäuses,
- Figur 6: eine perspektivische Ansicht von Batteriepolen der Batterie,
- Figur 7: eine Schnittansicht durch einen Batterieträger der Batterie und
- Figur 8: eine Schnittansicht durch einen Batteriedeckel der Batterie

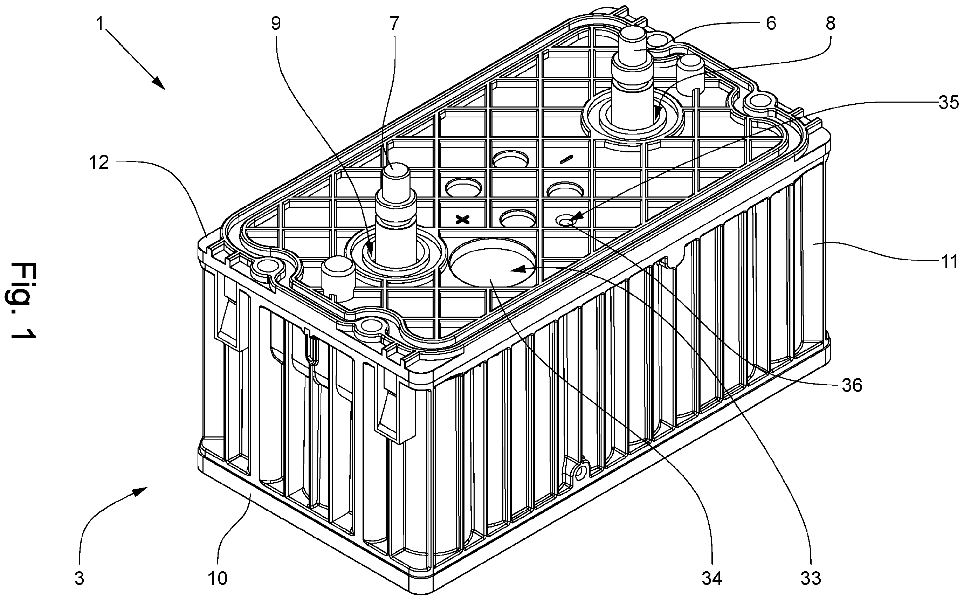

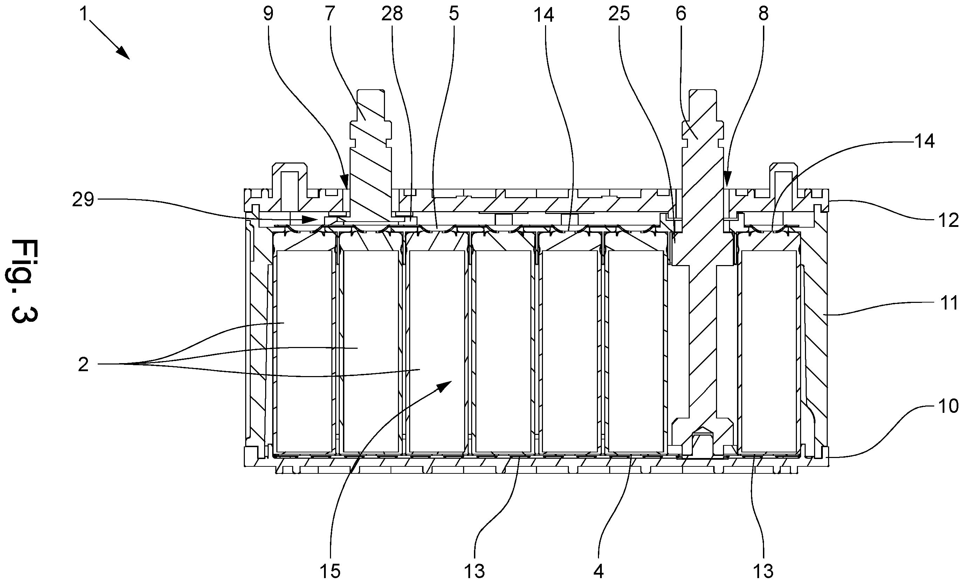

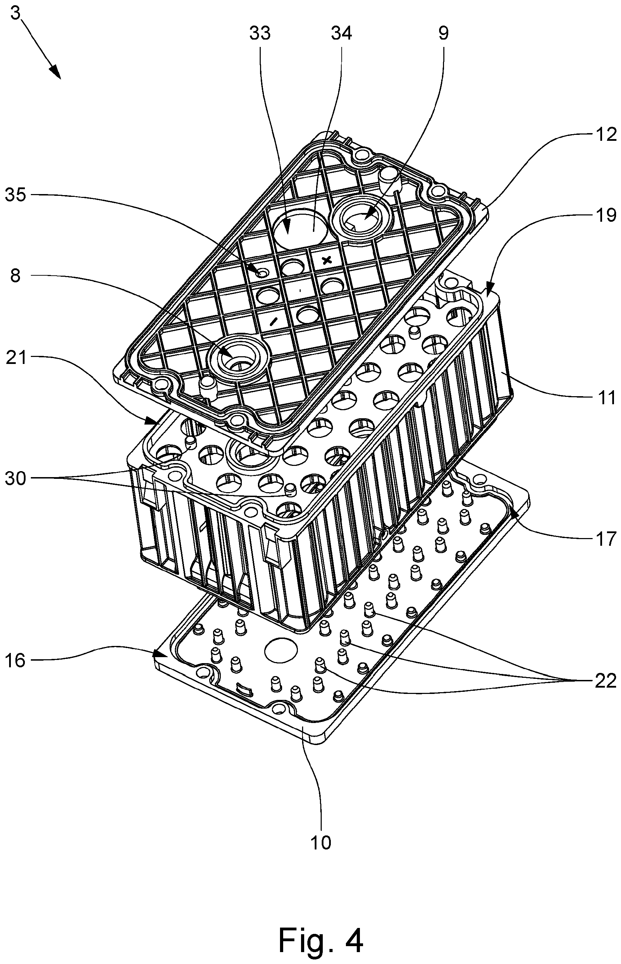

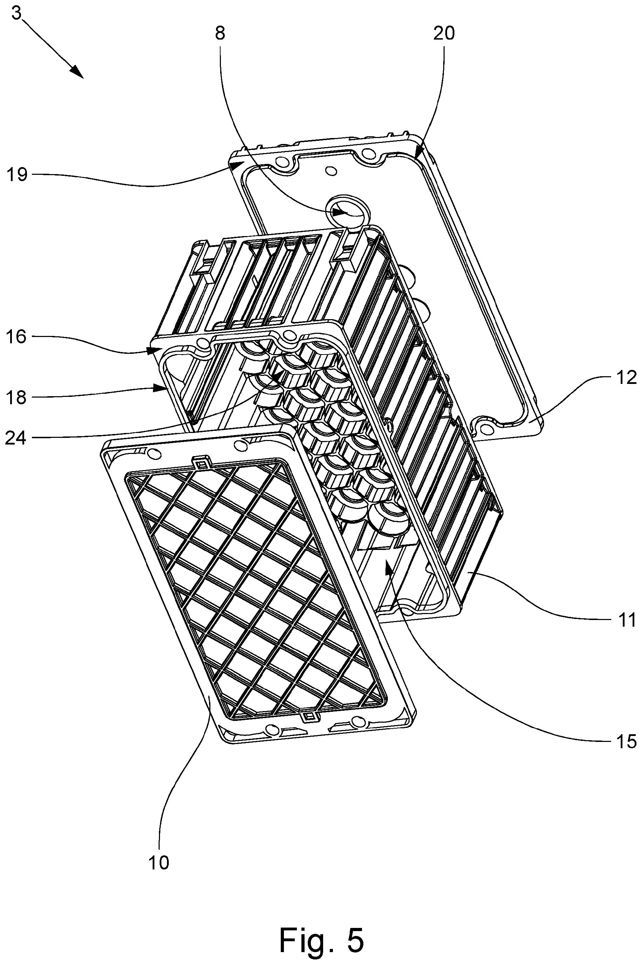

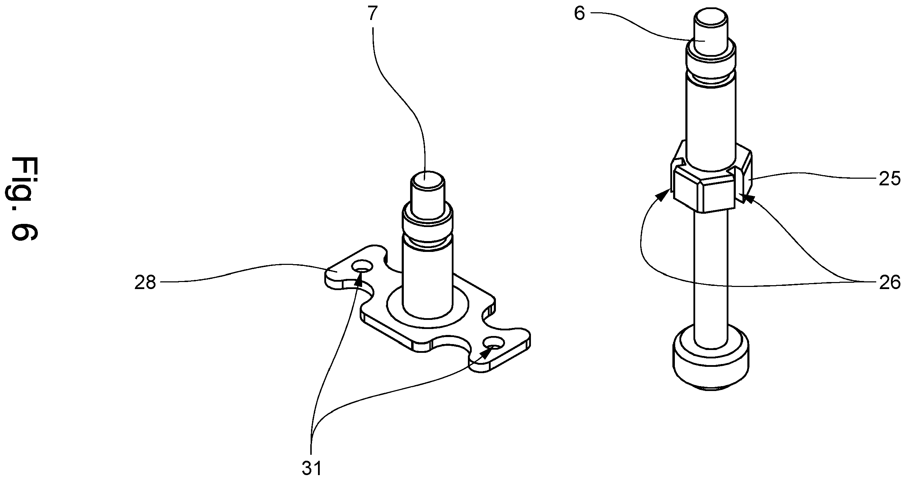

Die Figuren 1 bis 3 zeigen verschiedene Ansichten eines Ausführungsbeispiels einer Batterie 1. Die Batterie 1 dient sowohl der Versorgung von Verbrauchern mit elektrischer Energie als auch zur Speicherung von elektrischer Energie, die von Generatoren erzeugt wird. Die Batterie 1 weist eine Mehrzahl an Zellen 2, ein Batteriegehäuse 3, einen ersten elektrischen Zellverbinder 4, einen zweiten elektrischen Zellverbinder 5, einen ersten elektrischen Batteriepol 6 und einen zweiten elektrischen Batteriepol 7 auf. Weiter weist die Batterie 1 einen Batteriezulauf 8 und einen Batterieablauf 9 für ein Temperiermedium auf. Das Batteriegehäuse 3, welches ohne die zuvor genannten übrigen Komponenten der Batterie 1 in den Figuren 4 und 5 dargestellt ist, weist einen Batterieboden 10, einen Batterieträger 11 und einen Batteriedeckel 12 auf. Der erste Batteriepol 6 und der zweite Batteriepol 7 sind ohne die eingangs genannten übrigen Komponenten in Figur 6 dargestellt.

Der erste Batteriepol 6 ist durch den Batteriezulauf 8 geführt und der zweite Batteriepol 7 ist durch den Batterieablauf 9 geführt. Dadurch sind die Batteriepole 6, 7 im Betrieb der Batterie 1 durch ein Temperiermedium umspült, welches die Batteriepole 6, 7 kühlt. Sowohl der Batteriezulauf 8 als auch der Batterieablauf 9 sind im Batteriedeckel 12 angeordnet. Somit sind auch der erste Batteriepol 6 und der zweite Batteriepol 7 im Batteriedeckel 12 angeordnet.

Die Zellen 2 sind Rundzellen. Jede der Zellen 2 hat einen elektrischen Energiespeicher und ein Zellgehäuse in Zylinderform mit einer runden Querschnittskontur. Der elektrische Energiespeicher ist im Zellgehäuse angeordnet und das Zellgehäuse umschließt den elektrischen Energiespeicher dicht für ein Temperiermedium. Weiter weist jede der Zellen 2 einen ersten elektrischen Zellkontakt 13 auf einer ersten Fläche der Zelle 2 und einen zweiten elektrischen Zellkontakt 14 auf einer der ersten Fläche gegenüberliegenden zweiten Fläche der Zelle 2 auf.

Der Batterieboden 10, der Batterieträger 11 und der Batteriedeckel 12 umschließen einen Batterieinnenraum 15 abgesehen vom Batteriezulauf 8 und Batterieablauf 9 dicht für ein Temperiermedium. Somit kann ein Temperiermedium nur über den Batteriezulauf 8 und den Batterieablauf 9 dem Batterieinnenraum 15 zugeführt oder diesem entnommen werden. Die Zellen 2 sind im Batterieinnenraum 15 zur Umspülung mit einem Temperiermedium angeordnet. Durch die runde Querschnittskontur der Zellen 2 sind trotz der unmittelbar aneinandergrenzenden Anordnung der Zellen 2 Freiräume zwischen den Zellen 2 verblieben, durch welche ein Temperiermedium strömbar ist. Im Betrieb der Batterie 1 strömt ein Temperiermedium durch den Batteriezulauf 8 in den Batterieinnenraum 15 hinein und strömt durch den Batterieablauf 9 aus dem Batterieinnenraum 15 hinaus. Durch den beschriebenen Aufbau der Batterie 1 ist eine homogene und einheitliche Umströmung der Zellen 2 gegeben.

Der Batterieboden 10, der Batterieträger 11 und der Batteriedeckel 12 sind Spritzgusskomponenten aus Kunststoff. Der Batterieboden 10 und der Batterieträger 11 sind aus voneinander verschiedenen Kunststoffen und weisen eine gemeinsame Bodenkontaktfläche 16 auf. Die Bodenkontaktfläche 16 ist als Nut-und-Feder ausgebildet. Und zwar ist eine erste Nut 17 im Batterieboden 10 und ist eine erste Feder 18 im Batterieträger 11 ausgebildet. Der Batterieboden 10 und der Batterieträger 11 sind in der Bodenkontaktfläche 16 durch Laserdurchstrahlschweißen stoffschlüssig miteinander verbunden.

Auch der Batteriedeckel 12 und der Batterieträger 11 sind aus voneinander verschiedenen Kunststoffen und weisen eine gemeinsame Deckelkontaktfläche 19 auf. Die Deckelkontaktfläche 19 ist ebenfalls als Nut-und-Feder ausgebildet. Und zwar ist eine zweite Nut 20 im Batteriedeckel 12 und ist eine zweite Feder 21 im Batterieträger 11 ausgebildet. Der Batteriedeckel 12 und der Batterieträger 11 sind in der Deckelkontaktfläche 19 durch Laserdurchstrahlschweißen stoffschlüssig miteinander verbunden.

Der Batterieboden 10 weist Bodenaufnahmen 22 für die Zellen 2 auf, die Zapfen sind. Der erste Zellverbinder 4 ist zwischen dem Batterieboden 10 und den Zellen 2 angeordnet. Der erste Zellverbinder 4 weist zu den Bodenaufnahmen 22 passende Bodenausnehmungen 23 auf, die Öffnungen sind. Die Zellen 2 und der erste Zellverbinder 4 sind in die Bodenaufnahmen 22 eingesetzt, wodurch sie angeordnet und lateral fixiert sind. Die Abfolge Batterieboden 10, dann erster Zellverbinder 4 und dann Zellen 2 vereinfacht den Aufbau der Batterie 1.

Der Batterieträger 11 weist auf einer dem Batterieboden 10 gegenüberliegenden Ebene Trägeraufnahmen 24 für die Zellen 2 auf. Die Trägeraufnahmen 24 weisen eine polygone Innenquerschnittskontur in Form einer sechseckigen Querschnittskontur auf und sind alle gleich ausgebildet. Die Trägeraufnahmen 24 sind demnach wabenförmig. Durch die gleiche Ausbildung aller Trägeraufnahmen 24 vereinfachen sich Konstruktion und Herstellung des Batterieträgers 11. Die Zellen 2 sind in die Trägeraufnahmen 24 eingesetzt, wodurch sie lateral angeordnet und fixiert sind. Die polygone Innenquerschnittskontur der Trägeraufnahmen 24 in Verbindung mit der runden Querschnittskontur der Zellen 2 ist vorteilhaft, da Kontaktflächen zwischen den Zellen 2 und den Trägeraufnahmen 24 klein sind, wodurch eine Fläche der Zellen 2 entsprechend groß ist, welche mit einem Temperiermedium im Kontakt steht. Durch die Anordnung der Zellen 2 sowohl in den Bodenaufnahmen 22 als auch in den Trägeraufnahmen 24 sind die Zellen 2 vollständig angeordnet und vollständig fixiert, sodass eine weitere Fixierung der Zellen 2 nicht erforderlich ist. Das gilt insbesondere auch für Verwendungen der Batterie 1 in Umgebungen, die starke Vibrationen und Erschütterungen für die Batterie 1 bedeuten. Dazu zählen zum Beispiel Verwendungen in mobilen Vorrichtungen.

Der zweite Zellverbinder 5 ist zwischen dem Batteriedeckel 12 und den Zellen 2 angeordnet, und zwar ist er zwischen den Trägeraufnahmen 24 und dem Batteriedeckel 12 angeordnet. Die Abfolge Batteriedeckel 12, dann zweiter Zellverbinder 5 und dann Trägeraufnahmen 24 vereinfacht den Aufbau der Batterie 1.

Der erste Zellverbinder 4 und der zweite Zellverbinder 5 sind aus Blech, und zwar aus einem gestanzten und umgeformten Blech. Insbesondere sind die Öffnungen im ersten Zellverbinder 4 gestanzt.

Jeder der ersten Zellkontakte 13 und der erste Zellverbinder 4 sind elektrisch miteinander verbunden. Weiter sind jeder der zweiten Zellkontakte 14 und der zweite Zellverbinder 5 elektrisch miteinander verbunden. Somit sind die Zellen 2 elektrisch parallel geschaltet. Die Verbindungen sind durch Laserschweißen hergestellt.

Der erste Zellverbinder 4 und der erste Batteriepol 6 sind elektrisch miteinander verbunden. Weiter sind der zweite Zellverbinder 5 und der zweite Batteriepol 7 elektrisch miteinander verbunden. Die Verbindungen sind durch Laserschweißen hergestellt. Eine elektrische Verbindung mit der Batterie 1 erfolgt also über den ersten Batteriepol 6 und den zweiten Batteriepol 7. Im Betrieb der Batterie 1 ist jeder der Batteriepole 6, 7 mit einem elektrischen Leiter verbunden und fließt ein elektrischer Strom über die Leiter und die Batteriepole 6, 7 durch die Batterie 1.

Der erste Batteriepol 6 ist stabförmig ausgebildet und weist eine Batteriepolhalterung 25 auf. Der erste Batteriepol 6 ist mit der Batteriepolhalterung 25 in eine der Trägeraufnahmen 24 eingesetzt. Somit weist die Batterie 1 insgesamt 37 Zellen 2 auf. Die Batteriepolhalterung 25 ist an die Trägeraufnahme 24 angepasst. Demnach weist die Batteriepolhalterung 25 eine zur Trägeraufnahme 24 passende polygone äußere Querschnittskontur auf. Die Formgebung von der Batteriepolhalterung 25 und von der Trägeraufnahme 24 fixiert den ersten Batteriepol 6 gegen ein Verdrehen. Diese Fixierung ist vorteilhaft, da der erste Batteriepol 6 über eine Polschraubverbindung mit einem weiteren elektrischen Leiter verbindbar ist und bei einem Festziehen und Lösen der Polschraubverbindung auftretende Drehmomente vom Batterieträger 11 und nicht vom ersten Zellverbinder 4 aufgenommen werden.

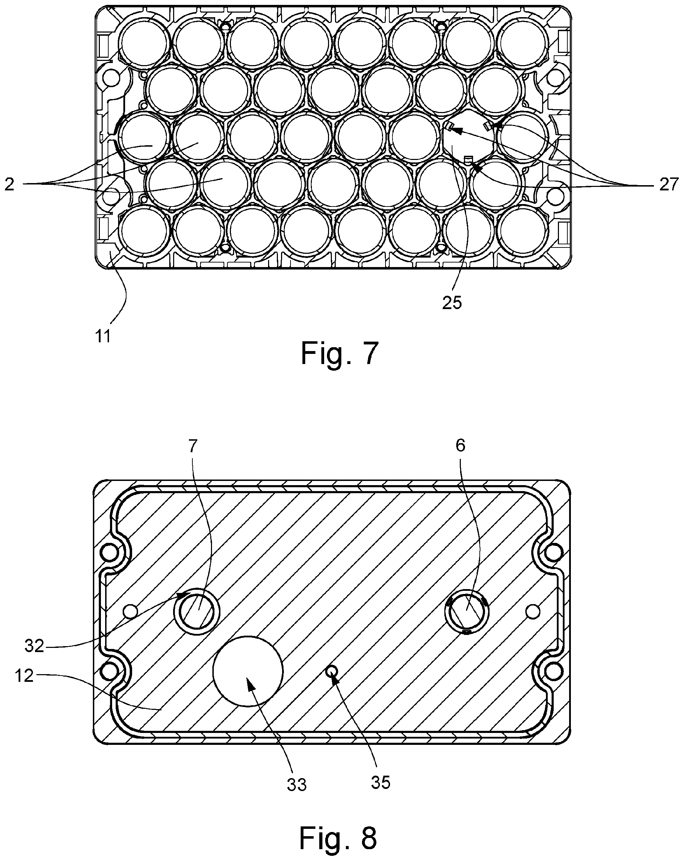

Die Batteriepolhalterung 25 weist eine Mehrzahl an Batteriepolausnehmungen 26 auf. Eine freie Batteriezulaufquerschnittsfläche 27 ist durch die Batteriepolhalterung 25 mit den Batteriepolausnehmungen 26 und die Trägeraufnahme 24 bestimmt, siehe Figur 7. Somit strömt im Betrieb der Batterie 1 ein Temperiermedium durch die Batteriepolausnehmungen 26. Demnach bilden die Batteriepolhalterung 25 mit den Batteriepolausnehmungen 26 und die Trägeraufnahme 24 zusammen eine Durchflussdrossel für ein Temperiermedium.

Der zweite Batteriepol 7 ist ebenfalls stabförmig und weist zusätzlich einen Batteriepolkragen 28 auf. Weiter weisen der Batteriepolkragen 28 und der Batterieträger 11 eine formschlüssige Kragenverbindung 29 auf, sodass der zweite Batteriepol 7 gegen ein Verdrehen fixiert ist. Die Kragenverbindung 29 weist im Batterieträger 11 zwei Kragenvorsprünge 30 und im Batteriepolkragen 28 zwei entsprechende Kragenausnehmungen 31 auf. Diese Fixierung ist vorteilhaft, da der zweite Batteriepol 7 über eine Polschraubverbindung mit einem weiteren elektrischen Leiter verbindbar ist und bei einem Festziehen und Lösen der Polschraubverbindung auftretende Drehmomente vom Batterieträger 11 und nicht vom zweiten Zellverbinder 5 aufgenommen werden.

Eine freie Batterieablaufquerschnittsfläche 32 ist durch den zweiten Batteriepol 7 und den Batterieablauf 9 bestimmt, indem der zweite Batteriepol 7 durch den Batterieablauf 9 nach außen geführt ist, siehe Figur 8. Die Batterieablaufquerschnittsfläche 32 ist größer als die Batteriezulaufquerschnittsfläche 27, sodass sich im Batterieinnenraum 15 kein übermäßiger Druck durch ein durch den Batterieinnenraum 15 strömendes Temperiermedium aufbaut.

Auf einer Außenseite des Batteriegehäuses 3, und zwar einer Außenseite des Batteriedeckels 12, ist eine Überdrucköffnung 33 ausgebildet. Die Überdrucköffnung 33 verbindet den Batterieinnenraum 15 mit dem Außenraum. Die Überdrucköffnung 33 ist mit einer spröden Berstscheibe 34 als Überdruckventil für ein Temperiermedium dicht verschlossen. Die Berstscheibe 34 ist eine Glasscheibe in Form eines Objektträgers für die Lichtmikroskopie.

Zusätzlich ist auf einer Außenseite des Batteriegehäuses 3, und zwar auf einer Außenseite des Batteriedeckels 12, eine Sensorausnehmung 35 ausgebildet. In der Sensorausnehmung 35 ist ein Temperatursensor 36 angeordnet.

Der erste Batteriepol 6, der zweite Batteriepol 7, der Batteriezulauf 8, der Batterieablauf 9, die Überdrucköffnung 31 und der Temperatursensor 36 sind im Batteriedeckel 12 angeordnet, wodurch die Handhabung der Batterie 1 vereinfacht ist.

Die ersten elektrischen Zellkontakte 13 und die zweiten elektrischen Zellkontakte 14 der Zellen 2, der erste Zellverbinder 4 und der zweite Zellverbinder 5 sind elektrische Leiter und im Batterieinnenraum 15 angeordnet. Deshalb sind sie im unmittelbaren Kontakt mit einem Temperiermedium, welches durch den Batterieinnenraum 15 geströmt wird. Folglich ist ein geeignetes Temperiermedium elektrisch isolierend, sodass die Zellen 2 nicht über das Temperiermedium entladen werden. Hinzu kommt, dass auch die Verbindungen zwischen den ersten Zellkontakten 13 und dem ersten Zellverbinder 4, die Verbindungen zwischen den zweiten Zellkontakten 14 und dem zweiten Zellverbinder 5, die Verbindung zwischen dem ersten Zellverbinder 4 und dem ersten Batteriepol 6 und die Verbindung zwischen dem zweiten Zellverbinder 5 und dem zweiten Batteriepol 7 durch ein durch den Batterieinnenraum 15 strömendes Temperiermedium umspült und dadurch gekühlt sind. Das ist nicht nur in diesem Ausführungsbeispiel der Fall, sondern ein grundlegendes Merkmal.

Beim Zusammenbau der Batterie 1 werden zunächst der Batteriepolkragen 28 und der zweite Zellverbinder 5 elektrisch leitendend miteinander verbunden, zum Beispiel verschweißt. Dann werden die Zellen 2 in die Trägeraufnahmen 24 gesetzt und die zweiten Zellkontakte 14 und der zweite Zellverbinder 5 wie beschrieben miteinander verbunden. Dann werden der übrige zweite Batteriepol 7 und der Batteriepolkragen 28 miteinander verbunden, zum Beispiel verschweißt. Dann werden die ersten Zellkontakte 13 und der erste Zellverbinder 4 wie beschrieben miteinander verbunden. Dann werden zum einen der Batterieboden 10 und der Batterieträger 11 und zum anderen der Batteriedeckel 12 und der Batterieträger wie beschrieben miteinander verbunden. Die Bodenaufnahmen 22 ordnen an und fixieren lateral dabei sowohl den ersten elektrischen Zellverbinder 4 als auch die Zellen 2.

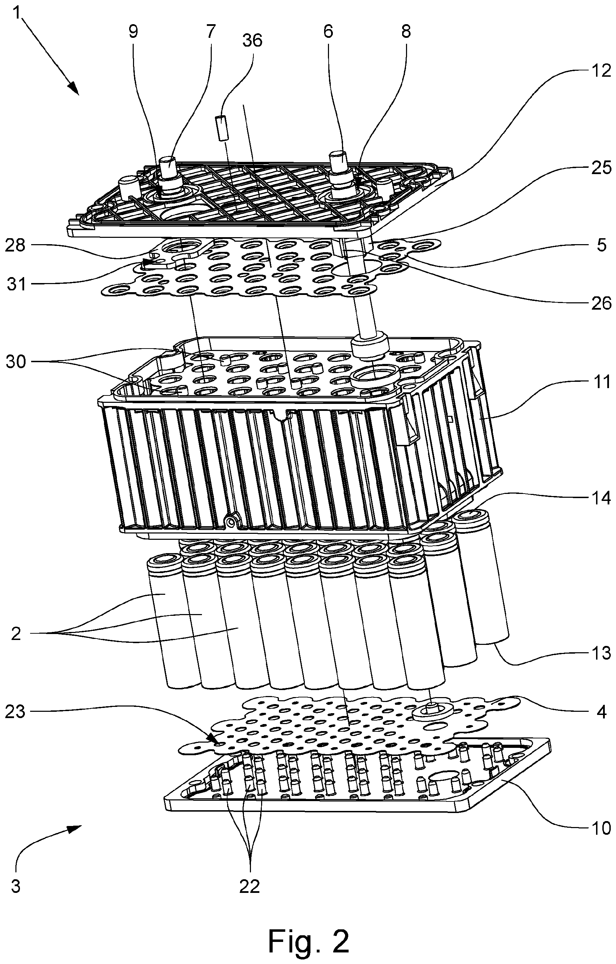

Wenn in der Beschreibung des Ausführungsbeispiels auf eine Mehrzahl einer Komponente in einer Figur verwiesen wird und das zur Komponente gehörige Bezugszeichen in der Figur nicht auf alle Komponenten verweist, sind dennoch alle Komponenten gemeint. Zum Beispiel wird in der Beschreibung auf die Zellen verwiesen und in Figur 2 verweist das Bezugszeichen 2 nur auf drei der Zellen. Dennoch sind alle Zellen gemeint.

### Bezugszeichen

- 1: Batterie
- 2: Zelle
- 3: Batteriegehäuse
- 4: erster elektrischer Zellverbinder
- 5: zweiter elektrischer Zellverbinder
- 6: erster elektrischer Batteriepol
- 7: zweiter elektrischer Batteriepol
- 8: Batteriezulauf
- 9: Batterieablauf
- 10: Batterieboden
- 11: Batterieträger
- 12: Batteriedeckel
- 13: erster elektrischer Zellkontakt
- 14: zweiter elektrischer Zellkontakt
- 15: Batterieinnenraum
- 16: Bodenkontaktfläche
- 17: erste Nut
- 18: erste Feder
- 19: Deckelkontaktfläche
- 20: zweite Nut
- 21: zweite Feder
- 22: Bodenaufnahme
- 23: Bodenausnehmung
- 24: Trägeraufnahme
- 25: Batteriepolhalterung
- 26: Batteriepolausnehmung
- 27: Batteriezulaufquerschnittsfläche
- 28: Batteriepolkragen
- 29: Kragenverbindung
- 30: Kragenvorsprung
- 31: Kragenausnehmung
- 32: Batterieablaufquerschnittsfläche
- 33: Überdrucköffnung
- 34: Berstscheibe
- 35: Sensorausnehmung
- 36: Temperatursensor

## Patentansprüche

1. Batterie (1) mit einer Mehrzahl an Zellen (2), einem Batteriegehäuse (3), einem ersten elektrischen Zellverbinder (4), einem zweiten elektrischen Zellverbinder (5), einem ersten elektrischen Batteriepol (6), einem zweiten elektrischen Batteriepol (7) und einem Batteriezulauf (8) und einem Batterieablauf (9) für ein Temperiermedium,
wobei jede der Zellen (2) einen ersten elektrischen Zellkontakt (13) auf einer ersten Fläche der Zelle (2) und einen zweiten elektrischen Zellkontakt (14) auf einer der ersten Fläche gegenüberliegenden zweiten Fläche der Zelle (2) aufweist,
wobei das Batteriegehäuse (3) einen Batterieboden (10), einen Batterieträger (11) und einen Batteriedeckel (12) aufweist und der Batterieboden (10), der Batterieträger (11) und der Batteriedeckel (12) einen Batterieinnenraum (15) abgesehen vom Batteriezulauf (8) und vom Batterieablauf (9) dicht für ein Temperiermedium umschließen,
wobei die Zellen (2) im Batterieinnenraum (15) zur Umspülung mit einem Temperiermedium angeordnet sind,
wobei einerseits jeder der ersten Zellkontakte (13) und der erste Zellverbinder (4) und andererseits jeder der zweiten Zellkontakte (14) und der zweite Zellverbinder (5) elektrisch miteinander verbunden sind und
wobei einerseits der erste Zellverbinder (4) und der erste Batteriepol (6) und andererseits der zweite Zellverbinder (5) und der zweite Batteriepol (7) elektrisch miteinander verbunden sind,
**dadurch gekennzeichnet,**
**dass** der erste Batteriepol (6) durch den Batteriezulauf (8) und der zweite Batteriepol (7) durch den Batterieablauf (9) aus dem Batterieinnenraum (15) nach außen geführt sind, wodurch die Batteriepole im Betrieb der Batterie durch ein Temperiermedium umspült sind.

2. Batterie (1) nach Anspruch 1, **dadurch gekennzeichnet, dass** sowohl der Batteriezulauf (8) als auch der Batterieablauf (9) im Batteriedeckel (12) angeordnet sind.

3. Batterie (1) nach Anspruch 1 oder 2, **dadurch gekennzeichnet, dass** der Batteriezulauf (8) eine freie Batteriezulaufquerschnittsfläche (27) und der Batterieablauf (9) eine freie Batterieablaufquerschnittsfläche (32) aufweisen und dass die Batteriezulaufquerschnittsfläche (27) kleiner ist als die Batterieablaufquerschnittsfläche (32).

4. Batterie (1) nach einem der Ansprüche 1 bis 3, **dadurch gekennzeichnet, dass** die Zellen (2) Rundzellen sind.

5. Batterie (1) nach einem der Ansprüche 1 bis 4, **dadurch gekennzeichnet, dass** der Batterieboden (10) Bodenaufnahmen (22) für die Zellen (2) aufweist, dass die Zellen (2) in die Bodenaufnahmen (22) eingesetzt sind und dass vorzugsweise die Bodenaufnahmen (22) Zapfen sind.

6. Batterie (1) nach einem der Ansprüche 1 bis 5, **dadurch gekennzeichnet, dass** der erste Zellverbinder (4) zwischen dem Batterieboden (10) und den Zellen (2) angeordnet ist.

7. Batterie (1) nach Anspruch 5 und 6, **dadurch gekennzeichnet, dass** der erste Zellverbinder (4) zu den Bodenaufnahmen (22) passende Bodenausnehmungen (23) aufweist.

8. Batterie (1) nach einem der Ansprüche 1 bis 7, **dadurch gekennzeichnet, dass** der Batterieträger (11) auf einer dem Batterieboden (10) gegenüberliegenden Ebene Trägeraufnahmen (24) aufweist und dass die Zellen (2) in die Trägeraufnahmen (24) eingesetzt sind.

9. Batterie (1) nach Anspruch 8, **dadurch gekennzeichnet, dass** der erste Batteriepol (6) eine Batteriepolhalterung (25) aufweist, dass der erste Batteriepol (6) mit der Batteriepolhalterung (25) in eine der Trägeraufnahmen (24) eingesetzt ist, dass die Batteriepolhalterung (25) an die Trägeraufnahme (24) angepasst ist, sodass der erste Batteriepol (6) gegen ein Verdrehen fixiert.

10. Batterie (1) nach Anspruch 9, **dadurch gekennzeichnet, dass** die Batteriepolhalterung (25) mindestens eine Batteriepolausnehmung (26) aufweist und dass die freie Batteriezulaufquerschnittsfläche (27) durch die Batteriepolhalterung (25) mit der mindestens einen Batteriepolausnehmung (26) und die Trägeraufnahme (24) bestimmt ist.

11. Batterie (1) nach einem der Ansprüche 8 bis 10, **dadurch gekennzeichnet, dass** mindestens eine der Trägeraufnahmen (24) eine polygone Innenquerschnittskontur aufweist.

12. Batterie (1) nach einem der Ansprüche 1 bis 11, **dadurch gekennzeichnet, dass** der zweite Zellverbinder (5) zwischen dem Batteriedeckel (12) und den Zellen (2) angeordnet ist.

13. Batterie (1) nach Anspruch 12 und einem der Ansprüche 8 bis 11, **dadurch gekennzeichnet, dass** der zweite Zellverbinder (5) zwischen den Trägeraufnahmen (24) und dem Batteriedeckel (12) angeordnet ist.

14. Batterie (1) nach einem der Ansprüche 1 bis 13, **dadurch gekennzeichnet, dass** der zweite Batteriepol (7) einen Batteriepolkragen (28) aufweist und dass der Batteriepolkragen (28) und der Batterieträger (11) eine formschlüssige Kragenverbindung (29) aufweisen, sodass der zweite Batteriepol (7) gegen ein Verdrehen fixiert ist.

15. Batterie (1) nach einem der Ansprüche 1 bis 14, **dadurch gekennzeichnet, dass** von den Komponenten Batterieboden (10), Batterieträger (11) und Batteriedeckel (12) mindestens eine der Komponenten aus Kunststoff ist, vorzugsweise eine Spritzgusskomponente ist.

16. Batterie (1) nach einem der Ansprüche 1 bis 15, **dadurch gekennzeichnet, dass** der Batterieboden (10) und der Batterieträger (11) aus voneinander verschiedenen Kunststoffen sind und eine gemeinsame Bodenkontaktfläche (16) aufweisen, dass der Batterieboden (10) und der Batterieträger (11) in der Bodenkontaktfläche (16) durch Laserdurchstrahlschweißen stoffschlüssig miteinander verbunden sind und dass vorzugsweise der Batterieboden (10) und der Batterieträger (11) in der Bodenkontaktfläche (16) als Nut-und-Feder ausgebildet sind und eine Nut-und-Feder-Verbindung aufweisen.

17. Batterie (1) nach einem der Ansprüche 1 bis 16, **dadurch gekennzeichnet, dass** der Batteriedeckel (12) und der Batterieträger (11) aus voneinander verschiedenen Kunststoffen sind und eine gemeinsame Deckelkontaktfläche (19) aufweisen, dass der Batteriedeckel (12) und der Batterieträger (11) in der Deckelkontaktfläche (19) durch Laserdurchstrahlschweißen stoffschlüssig miteinander verbunden sind und dass vorzugsweise der Batteriedeckel (12) und der Batterieträger (11) in der Deckelkontaktfläche (19) als Nut-und-Feder ausgebildet sind und eine Nut-und-Feder-Verbindung aufweisen.

18. Batterie (1) nach einem der Ansprüche 1 bis 17, **dadurch gekennzeichnet, dass** von den Komponenten erster Zellverbinder (4) und zweiter Zellverbinder (5) mindestens eine der Komponenten aus einem Blech ist, vorzugsweise ein gestanztes und umgeformtes Blech ist.

19. Batterie (1) nach einem der Ansprüche 1 bis 18, **dadurch gekennzeichnet, dass** jeder der ersten Zellkontakte (13) und der erste Zellverbinder (4) durch Laserschweißen miteinander verbunden sind und/oder jeder der zweiten Zellkontakte (14) und der zweite Zellverbinder (5) durch Laserschweißen miteinander verbunden sind.

20. Batterie (1) nach einem der Ansprüche 1 bis 19, **dadurch gekennzeichnet, dass** der erste Zellverbinder (4) und der erste Batteriepol (6) durch Laserschweißen miteinander verbunden sind und/oder dass der zweite Zellverbinder (5) und der zweite Batteriepol (7) durch Laserschweißen miteinander verbunden sind.

21. Batterie (1) nach einem der Ansprüche 1 bis 20, **dadurch gekennzeichnet, dass** auf mindestens einer Außenseite des Batteriegehäuses (3), vorzugsweise des Batteriedeckels (12), mindestens eine Überdrucköffnung (33) ausgebildet ist und dass die Überdrucköffnung (33) durch eine spröde Berstscheibe (34), vorzugsweise eine Glasscheibe, als Überdruckventil dicht für ein Temperiermedium verschlossen ist.

22. Batterie (1) nach einem der Ansprüche 1 bis 21, **dadurch gekennzeichnet, dass** auf mindestens einer Außenseite des Batteriegehäuses (3), vorzugsweise des Batteriedeckels (12), mindestens eine Sensorausnehmung (35) ausgebildet und in der Sensorausnehmung (35) ein Temperatursensor (36) angeordnet ist.

## Claims

1. Battery (1) with a plurality of cells (2), a battery housing (3), a first electrical cell connector (4), a second electrical cell connector (5), a first electrical battery pole (6), a second electrical battery pole (7) and a battery inflow (8) and a battery outflow (9) for a thermoregulation medium,
wherein each of the cells (2) has a first electrical cell contact (13) on a first surface of the cell (2) and a second electrical cell contact (14) on a second surface of the cell (2) opposite the first surface,
wherein the battery housing (3) has a battery base (10), a battery carrier (11) and a battery cap (12) and the battery base (10), the battery carrier (11) and the battery cap (12) enclose a battery interior (15), apart from the battery inflow (8) and the battery outflow (9), sealed for a thermoregulation medium,
wherein the cells (2) are arranged in the battery interior (15) so that a thermoregulation medium flows around them,
wherein, on the one hand, each of the first cell contacts (13) and the first cell connector (4) and, on the other hand, each of the second cell contacts (14) and the second cell connector (5) are electrically connected to one another, and
wherein, on the one hand, the first cell connector (4) and the first battery pole (6) and, on the other hand, the second cell connector (5) and the second battery pole (7) are electrically connected to one another,
**characterized in**
**that** the first battery pole (6) is led out of the battery interior (15) through the battery inflow (8) and the second battery pole (7) is led out through the battery outflow (9), whereby the battery poles have a thermoregulation medium flowing around them during operation of the battery.

2. Battery (1) according to claim 1, **characterized in that** both the battery inflow (8) and the battery outflow (9) are arranged in the battery cap (12).

3. Battery (1) according to claim 1 or 2, **characterized in that** the battery inflow (8) has a free battery inflow cross-sectional area (27) and the battery outlet (9) has a free battery outlet cross-sectional area (32), and **in that** the battery inflow cross-sectional area (27) is smaller than the battery outlet cross-sectional area (32).

4. Battery (1) according to any one of claims 1 to 3, **characterized in that** the cells (2) are round cells.

5. Battery (1) according to any one of claims 1 to 4, **characterized in that** the battery base (10) has base holders (22) for the cells (2), that the cells (2) are inserted into the base holders (22) and that preferably the base holders (22) are pins.

6. Battery (1) according to any one of claims 1 to 5, **characterized in that** the first cell connector (4) is arranged between the battery base (10) and the cells (2).

7. Battery (1) according to claims 5 and 6, **characterized in that** the first cell connector (4) has base recesses (23) matching the base holders (22).

8. Battery (1) according to any one of claims 1 to 7, **characterized in that** the battery carrier (11) has carrier holders (24) on a plane opposite the battery base (10) and that the cells (2) are inserted into the carrier holders (24).

9. Battery (1) according to claim 8, **characterized in that** the first battery pole (6) has a battery pole holder (25), **in that** the first battery pole (6) is inserted with the battery pole holder (25) into one of the carrier receptacles (24), **in that** the battery pole holder (25) is adapted to the carrier receptacle (24) so that the first battery pole (6) is fixed against twisting.

10. Battery (1) according to claim 9, **characterized in that** the battery terminal holder (25) has at least one battery terminal recess (26) and **in that** the free battery inflow cross-sectional area (27) is determined by the battery terminal holder (25) with the at least one battery terminal recess (26) and the carrier holder (24).

11. Battery (1) according to any one of claims 8 to 10, **characterized in that** at least one of the carrier holders (24) has a polygonal inner cross-sectional contour.

12. Battery (1) according to any one of claims 1 to 11, **characterized in that** the second cell connector (5) is arranged between the battery cap (12) and the cells (2).

13. Battery (1) according to claim 12 and any one of claims 8 to 11, **characterized in that** the second cell connector (5) is arranged between the carrier holders (24) and the battery cap (12).

14. Battery (1) according to any one of claims 1 to 13, **characterized in that** the second battery pole (7) has a battery pole collar (28) and **in that** the battery pole collar (28) and the battery carrier (11) have a form-fitting collar connection (29), so that the second battery pole (7) is fixed against twisting.

15. Battery (1) according to any one of claims 1 to 14, **characterized in that**, of the components battery base (10), battery carrier (11) and battery cap (12), at least one of the components is made of plastic, preferably an injection-molded component.

16. Battery (1) according to any one of claims 1 to 15, **characterized in that** the battery base (10) and the battery carrier (11) are made of plastics different from each other and have a common base contact surface (16), that the battery base (10) and the battery carrier (11) are connected to each other in the base contact surface (16) by laser transmission welding, and that preferably the battery base (10) and the battery carrier (11) are designed as tongue-and-groove in the base contact surface (16) and have a tongue-and-groove connection.

17. Battery (1) according to any one of claims 1 to 16, **characterized in that** the battery cap (12) and the battery carrier (11) are made of different plastics and have a common cap contact surface (19), that the battery cap (12) and the battery carrier (11) are connected to each other in the cap contact surface (19) by laser transmission welding, and that preferably the battery cap (12) and the battery carrier (11) are designed as a tongue-and-groove in the cap contact surface (19) and have a tongue-and-groove connection.

18. Battery (1) according to any one of claims 1 to 17, **characterized in that** at least one of the first cell connector (4) and the second cell connector (5) is a sheet metal component, preferably a stamped and formed sheet metal component.

19. Battery (1) according to any one of claims 1 to 18, **characterized in that** each of the first cell contacts (13) and the first cell connector (4) are connected to each other by laser welding and/or each of the second cell contacts (14) and the second cell connector (5) are connected to each other by laser welding.

20. Battery (1) according to any one of claims 1 to 19, **characterized in that** the first cell connector (4) and the first battery pole (6) are connected to each other by laser welding and/or **in that** the second cell connector (5) and the second battery pole (7) are connected to each other by laser welding.

21. Battery (1) according to any one of claims 1 to 20, **characterized in that** at least one overpressure opening (33) is designed on at least one outer side of the battery housing (3), preferably of the battery cap (12), and that the overpressure opening (33) is tight for a thermoregulation medium by a brittle bursting disc (34), preferably a glass disc, as an overpressure valve.

22. Battery (1) according to any one of claims 1 to 21, **characterized in that** at least one sensor recess (35) is designed on at least one outer side of the battery housing (3), preferably of the battery cap (12), and a temperature sensor (36) is arranged in the sensor recess (35).

## Revendications

1. Batterie (1), comprenant une pluralité de cellules (2), un boîtier de batterie (3), un premier connecteur de cellules (4) électrique, un deuxième connecteur de cellules (5) électrique, un premier pôle de batterie (6) électrique, un deuxième pôle de batterie (7) électrique ainsi qu'une arrivée de batterie (8) et un écoulement de batterie (9) pour un fluide de régulation de température, chacune des cellules (2) possédant un premier contact de cellule (13) électrique sur une première surface de la cellule (2) et un deuxième contact de cellule (14) électrique sur une deuxième surface de la cellule (2), opposée à la première surface,
le boîtier de batterie (3) possédant un fond de batterie (10), un porte-batterie (11) et un couvercle de batterie (12) et le fond de batterie (10), le porte-batterie (11) et le couvercle de batterie (12) enfermant un espace intérieur de batterie (15) de manière étanche pour un fluide de régulation de température, à l'exception de l'amenée de batterie (8) et de l'écoulement de batterie (9),
les cellules (2) étant disposées dans l'espace intérieur de batterie (15) en vue d'être aspergées avec un fluide de régulation de température,
chacun des premiers contacts de cellule (13) et le premier connecteur de cellule (4) étant reliés électriquement entre eux d'un côté et chacun des deuxièmes contacts de cellule (14) et le deuxième connecteur de cellules (5) de l'autre côté et
le premier connecteur de cellule (4) et le premier pôle de batterie (6) étant reliés électriquement entre eux d'un côté et le deuxième connecteur de cellule (5) et le deuxième pôle de batterie (7) de l'autre côté,
**caractérisée en ce**
**que** le premier pôle de batterie (6) est amené vers l'extérieur hors de l'espace intérieur de batterie (15) à travers l'arrivée de batterie (8) et la deuxième pôle de batterie (7) à travers l'écoulement de batterie (9), moyennant quoi les pôles de batterie sont aspergés par un fluide de régulation de température lors du fonctionnement de la batterie.

2. Batterie (1) selon la revendication 1, **caractérisée en ce que** l'arrivée de batterie (8) ainsi que l'écoulement de batterie (9) sont disposés dans le couvercle de batterie (12).

3. Batterie (1) selon la revendication 1 ou 2, **caractérisée en ce que** l'arrivée de batterie (8) présente une surface de section transversale d'arrivée de batterie libre (27) et l'écoulement de batterie (9) une surface de section transversale d'écoulement de batterie libre (32) et **en ce que** la surface de section transversale d'arrivée de batterie libre (27) est plus petite que la surface de section transversale d'écoulement de batterie libre (32).

4. Batterie (1) selon l'une des revendications 1 à 3, **caractérisée en ce que** les cellules (2) sont des cellules rondes.

5. Batterie (1) selon l'une des revendications 1 à 4, **caractérisée en ce que** le fond de batterie (10) possède des logements de fond (22) pour les cellules (2), **en ce que** les cellules (2) sont engagées dans les logements de fond (22) et **en ce que** les logements de fond (22) sont de préférence des tenons.

6. Batterie (1) selon l'une des revendications 1 à 5, **caractérisée en ce que** le premier connecteur de cellules (4) est disposé entre le fond de batterie (10) et les cellules (2).

7. Batterie (1) selon la revendication 5 et 6, **caractérisée en ce que** le premier connecteur de cellules (4) possède des cavités de fond (23) adaptées aux logements de fond (22).

8. Batterie (1) selon l'une des revendications 1 à 7, **caractérisée en ce que** le porte-batterie (11) possède des logements d'élément porteur (24) sur un plan à l'opposé du fond de batterie (10) et **en ce que** les cellules (2) sont engagées dans les logements d'élément porteur (24).

9. Batterie (1) selon la revendication 8, **caractérisée en ce que** le premier pôle de batterie (6) possède un dispositif de maintien de pôle de batterie (25), **en ce que** le premier pôle de batterie (6) est engagé avec le dispositif de maintien de pôle de batterie (25) dans l'un des logements d'élément porteur (24), **en ce que** le dispositif de maintien de pôle de batterie (25) est adapté au logement d'élément porteur (24) de sorte que le premier pôle de batterie (6) est bloqué contre un mouvement de torsion.

10. Batterie (1) selon la revendication 9, **caractérisée en ce que** le dispositif de maintien de pôle de batterie (25) possède au moins une cavité de pôle de batterie (26) et **en ce que** la surface de section transversale d'arrivée de batterie libre (27) est déterminée par le dispositif de maintien de pôle de batterie (25) avec l'au moins une cavité de pôle de batterie (26) et le logement d'élément porteur (24).

11. Batterie (1) selon l'une des revendications 8 à 10, **caractérisée en ce qu'**au moins l'un des logements d'élément porteur (24) présente un contour de section transversale intérieur polygonal.

12. Batterie (1) selon l'une des revendications 1 à 11, **caractérisée en ce que** le deuxième connecteur de cellules (5) est disposé entre le couvercle de batterie (12) et les cellules (2).

13. Batterie (1) selon la revendication 12 et l'une des revendications 8 à 11, **caractérisée en ce que** le deuxième connecteur de cellules (5) est disposé entre les logements d'élément porteur (24) et le couvercle de batterie (12).

14. Batterie (1) selon l'une des revendications 1 à 13, **caractérisée en ce que** le deuxième pôle de batterie (7) possède une collerette de pôle de batterie (28) et **en ce que** la collerette de pôle de batterie (28) et le porte-batterie (11) possèdent une liaison de collerette par complémentarité de formes (29), de sorte que le deuxième pôle de batterie (7) est bloqué contre un mouvement de torsion.

15. Batterie (1) selon l'une des revendications 1 à 14, **caractérisée en ce que** parmi les composants fond de batterie (10), porte-batterie (11) et couvercle de batterie (12) au moins l'un des composants est en matière plastique, de préférence un composant moulé par injection.

16. Batterie (1) selon l'une des revendications 1 à 15, **caractérisée en ce que** le fond de batterie (10) et le porte-batterie (11) sont constitués de matières plastiques différentes l'une de l'autre et possèdent une surface de contact de fond (16) commune, **en ce que** le fond de batterie (10) et le porte-batterie (11) sont reliés l'un à l'autre par fusion de matières dans la surface de contact de fond (16) par soudage par rayonnement laser et **en ce que** le fond de batterie (10) et le porte-batterie (11) sont de préférence configurés en tant que rainure et languette dans la surface de contact de fond (16) et présentent une liaison de type rainure et languette.

17. Batterie (1) selon l'une des revendications 1 à 16, **caractérisée en ce que** le couvercle de batterie (12) et le porte-batterie (11) sont constitués de matières plastiques différentes l'une de l'autre et possèdent une surface de contact de couvercle (19) commune, **en ce que** le couvercle de batterie (12) et le porte-batterie (11) sont reliés l'un à l'autre par fusion de matières dans la surface de contact de couvercle (19) par soudage par rayonnement laser et **en ce que** le couvercle de batterie (12) et le porte-batterie (11) sont de préférence configurés en tant que rainure et languette dans la surface de contact de couvercle (19) et présentent une liaison de type rainure et languette.

18. Batterie (1) selon l'une des revendications 1 à 17, **caractérisée en ce que** parmi les composants premier connecteur de cellules (4) et deuxième connecteur de cellules (5), au moins l'un des composants est en une tôle, de préférence une tôle estampée et façonnée.

19. Batterie (1) selon l'une des revendications 1 à 18, **caractérisée en ce que** chacun des premiers contacts de cellule (13) et le premier connecteur de cellules (4) sont reliés entre eux par soudage au laser et/ou chacun des deuxièmes contacts de cellule (14) et le deuxième connecteur de cellules (5) sont reliés entre eux par soudage au laser.

20. Batterie (1) selon l'une des revendications 1 à 19, **caractérisée en ce que** le premier connecteur de cellules (4) et le premier pôle de batterie (6) sont reliés entre eux par soudage au laser et/ou **en ce que** le deuxième connecteur de cellules (5) et le deuxième pôle de batterie (7) sont reliés entre eux par soudage au laser.

21. Batterie (1) selon l'une des revendications 1 à 20, **caractérisée en ce qu'**au moins une ouverture de surpression (33) est formée sur au moins un côté extérieur du boîtier de batterie (3), de préférence du couvercle de batterie (12), et **en ce que** l'ouverture de surpression (33) est fermée de manière étanche pour un fluide de régulation de température par un disque d'éclatement cassant (34), de préférence un disque en verre, faisant office de soupape de surpression.

22. Batterie (1) selon l'une des revendications 1 à 21, **caractérisée en ce qu'**au moins un logement de capteur (35) est formé sur au moins un côté extérieur du boîtier de batterie (3), de préférence du couvercle de batterie (12), et un capteur de température (36) est disposé dans le logement de capteur (35).
